# EUROPÄISCHE PATENTANMELDUNG

(11) **EP 0 771 532 A1**
(43) Veröffentlichungstag der Anmeldung: **07.05.1997**
(21) Anmeldenummer: 96115225.3
(22) Anmeldetag: 23.09.1996
(51) Int. Cl.: A23K 1/16

(54) **Verwendung von wässrigen L-Tryptophan- und/oder L-Threonin-Salzlösungen**

(30) Priorität: 02.11.1995 DE 19540788
(71) Anmelder: Degussa Aktiengesellschaft, 60387 Frankfurt am Main (DE)
(72) Erfinder: Lotter, Hermann, Dr., 63674 Altenstadt (DE); Drauz, Karlheinz, Prof. Dr., 63579 Freigericht (DE)

(57) **Zusammenfassung**

Zur Supplementierung von Mischfuttern mit L-Tryptophan und/oder L-Threonin werden hochkonzentrierte wäßrige L-Tryptophan- und/oder L-Threonin-Salzlösungen verwendet. Sie sind einfach und exakt dosierbar, lassen sich hochkonzentriert mit einem Gehalt zwischen 30 und 70 Gew.-% herstellen und weisen auch über einen längeren Zeitraum von wenigstens drei Monaten bei niedrigen Außentemperaturen eine überraschend hohe Lagerstabilität (geringe Kristallisationsneigung, keine chemische Zersetzung, keine Racemisierung) auf.

## Beschreibung

Die Erfindung betrifft die Verwendung von wässrigen L-Tryptophan- und/oder L-Threonin-Salzlösungen zur Supplementierung von Mischfuttern mit L-Tryptophan und/oder L-Threonin.

Industriell hergestellte Mischfutter dienen insbesondere zur Ernährung der verschiedenen landwirtschaftlichen Nutztiere, wie Geflügel, Schweine und Rinder, aber auch zur Ernährung von Haustieren. Das jeweilige Futter sollte hierbei alle für die entsprechende Tierart notwendigen Nährstoffe in ausgewogener Menge enthalten.

Die Zusammensetzung der Mischfutter ist je nach Angebot und Preis der Komponenten Änderungen unterworfen. Die Rezeptur muß jedoch immer so gestaltet werden, daß die Nährstoffgehalte dem jeweiligen Bedarf der Tiere entsprechen. Deshalb werden dem Mischfutter Supplemente zugesetzt, die zur Verbesserung der ernährungsphysiologischen Wirksamkeit der Rationen führen. Hierzu zählen Aminosäuren, wie L-Threonin und L-Tryptophan, sowie Mineralstoffe, Spurenelemente und Konservierungsmittel.

Einzelfuttermittel und Supplemente liegen zunächst als Einzelkomponenten vor und müssen je nach Beschaffenheit in einem Mischvorgang in einer geeigneten Mischanlage homogenisiert werden. Hierzu ist eine genügende Dosiergenauigkeit und Mischgenauigkeit erforderlich. Für Supplemente, die im fertigen Mischfutter nur in geringer Konzentration vorliegen, ist eventuell die Herstellung einer höherkonzentrierten Vormischung unumgänglich.

Wäßrige Lösungen der Supplemente haben hierbei den Vorteil, daß sie auch in kleinen Mengen exakt dosiert werden können. Als flüssige Formulierung ersparen sie zudem bei der Supplementierung von Mischfuttern die sonst oft notwendige, das Supplement in höherer Konzentration enthaltende Vormischung. Zudem können sie direkt in der vorgesehenen Konzentration, z. B. durch Versprühen in eine Mischkammer, mit den bereits in der gewünschten Konzentration vorliegenden übrigen Komponenten des Mischfutters homogen vermischt werden.

Weiterhin kann durch Einsatz wässriger Lösungen der Supplemente i. d. R. der Transport vom Hersteller zum Verbraucher und die Lagerung beim Mischfutter-Hersteller durch Einsatz von Silo-Fahrzeugen und geeigneten Lagertanksystemen erheblich vereinfacht und damit kostengünstiger gestaltet werden.

Voraussetzung hierfür ist, daß möglichst hochkonzentrierte Lösungen der Supplemente hergestellt werden können, um Transport- und Lagerkosten zu minimieren. Ferner sollen diese hochkonzentrierten Lösungen über einen längeren Zeitraum und eventuell auch bei niedriger Außentemperatur lagerstabil bleiben. Dies beinhaltet eine geringe Kristallisationsneigung, keine chemische Zersetzung sowie keine Racemisierung beim Einsatz von L-Aminosäuren. Sollte doch einmal bei tieferen Temperaturen das Supplement aus der wässrigen Lösung kristallisieren, so soll es schließlich durch einfaches Aufwärmen und Umpumpen der Suspension wieder gelöst werden können.

Aus der DE-OS 28 50 075, die ein Verfahren zur Stabilisierung von Tryptophan enthaltenden Lösungen betrifft, weiß man, daß Lösungen von Tryptophan oder von Tryptophan enthaltenden Aminosäuregemischen, dazu neigen, sich innerhalb kurzer Zeit, insbesondere unter der Einwirkung von Licht und/oder Luftsauerstoff, zu verfärben. Zur Vermeidung der Zersetzung wird der Zusatz geringer Mengen von Natriumpyrosulfid (Pharmazie 27 (1972), S. 660 - 669) oder eines Salzes der dithionigen Säure in einer Menge von mindestens 0,01 g pro 100 ml Lösung vorgeschlagen. Abgesehen davon, daß die Zugabe solcher Substanzen das Produkt in genehmigungspflichtiger Weise verändert, scheinen Zusätze der vorgeschlagenen Art zu Futtermitteln nicht absolut unbedenklich.

Das geschilderte Problem der geringen Stabilität von L-Tryptophan-Lösungen gilt in ähnlicher Weise auch für L-Threonin-Lösungen und hat u. a. dazu geführt, daß bis heute weder L-Tryptophan noch L-Threonin in ausreichender Qualität als Flüssigsupplemente eingesetzt werden, sofern die genannten Aminosäuren überhaupt zur Supplementierung eingesetzt werden.

In Anbetracht des hierin dargelegten und diskutierten Standes der Technik liegt der Erfindung die Aufgabe zugrunde, eine flüssige Supplementierung des L-Threonins und L-Tryptophans zu finden, die für industriell hergestelltes Mischfutter geeignet ist, die auch besonders in Form von hochkonzentrierten Lösungen über einen längeren Zeitraum lagerstabil sein soll und die zudem leicht wieder auflösbar sein soll, falls das Supplement bei sehr niedrigen Temperaturen doch einmal kristallisiert.

Gelöst werden diese sowie weitere nicht im einzelnen genannte Aufgaben mit einer Verwendung von lagerstabilen, hochkonzentrierten wässrigen L-Tryptophan- und/oder L-Threonin-Salzlösungen mit einem Gehalt an L-Tryptophan und/oder L-Threonin von zwischen 30 und 70 Gew.-% zur Supplementierung von Tierfuttermitteln und industriell hergestellten Mischfuttern mit L-Tryptophan und/oder L-Threonin.

Überraschenderweise wurde im Rahmen der Erfindung gefunden, daß die Supplementierung von Futtermitteln und Mischfuttern auch mit wässrigen hochkonzentrierten Lösungen von L-Threonin und L-Tryptophan möglich ist.

Dabei war zunächst unerwartet, daß L-Typtophan- und/oder L-Threonin-Salzlösungen sich überhaupt in einer Menge zwischen 30 und 70 Gew.-% in einer wässrigen Lösung herstellen lassen. Die Aminosäuren selbst weisen in Wasser bei 20 °C nur eine relativ geringe Löslichkeit von 8,3 Gew.-% (L-Threonin) und 1,0 Gew.-% (L-Tryptophan) auf. Werden jedoch die Aminosäuren in Form ihrer Salze eingesetzt, so können bei Temperaturen von ca. 20 °C Gehalte der freien Aminosäure von 60 bis 70 Gew.-% in wässriger Lösung erreicht werden. Dies ist insbesondere im Falle des L-Tryptophan nicht ohne weiteres vorhersehbar gewesen, da hierbei der Aminosäuregehalt der Salzlösung um mehr als das 60fache gesteigert werden kann.

Zu den erfindungsgemäß zu verwendenden L-Tryptophan- und L-Threonin-Salzen gehören alle dem Fachmann geläufigen Verbindungen. Bevorzugt sind die Erdalkali- und Alkalisalze, wobei von diesen wiederum besonders bevorzugt die Natrium- und Kaliumsalze sind. In bevorzugter Ausführungsform der Erfindung wird daher ein L-Tryptophan-Natrium- oder Kaliumsalz verwendet. In weiterhin besonders bevorzugter erfindungsgemäßer Abwandlung wird ein L-Threonin-Natrium- oder Kaliumsalz eingesetzt.

Trotz der oben erwähnten hohen Salzkonzentration weisen die erfindungsgemäßen wässrigen Lösungen eine geringe Kristallisationsneigung und eine hohe Lagerstabilität auf. So konnte nach einer Lagerung der Lösungen bei 60 °C über einen Zeitraum von einer Woche keine chemische Zersetzung (Gehaltsabnahme der Aminosäure) oder eine Racemisierung nachgewiesen werden. In besonders zweckmäßiger Ausführungsform kennzeichnet sich die erfindungsgemäße Verwendung durch eine Lagerstabilität der eingesetzten Supplementierungslösungen von wenigstens drei Monaten bei Temperaturen zwischen -20 °C und +5 °C. Das bedeutet, daß eine außerordentlich niedrige Kristallisationstendenz vorliegt, wodurch eine unproblematische Lagerung der hochkonzentrierten, wässrigen Salzlösungen von L-Threonin und L-Tryptophan im Temperaturbereich von +5 °C bis -20 °C gegeben ist. So zeigten Salzlösungen mit 55 Gew.-% L-Threonin bzw. 50 (Natriumsalz) und 55 (Kaliumsalz) Gew.-% L-Tryptophan über einen Zeitraum von drei Monaten bei +5 °C keinerlei Kristallisationsneigung, blieben pumpfähig und zeigten keine meßbare chemische Zersetzung oder Racemisierung. Selbst bei einer Temperatur von -20 °C konnten Lösungen mit 55 Gew.-% L-Threonin in einer hochviskosen Form problemlos über eine Zeitraum von drei Monaten gelagert werden. Zudem waren sie auch unter diesen extremen Bedingungen bis zu einer Konzentration von 45 Gew.-% L-Threonin noch fließfähig. Salzlösungen des L-Tryptophans mit Konzentration von 30 (Natriumsalz) bzw. 55 (Kaliumsalz) Gew.-% L-Aminosäure verblieben über einen Zeitraum von drei Monaten bei Lagertemperatur bis -5 °C stabil und pumpfähig. Höherkonzentrierte Lösungen, bei denen sich beispielsweise bei -20 °C oder Temperaturen, die noch darunter lagen, Kristalle gebildet hatten, konnten durch einfaches Aufwärmen der Kristallsuspension wieder in eine lösliche Form überführt werden.

Die wässrigen, hochkonzentrierten Salzlösungen des L-Threonins und L-Tryptophans gemäß der Erfindung haben gegenüber den kristallisierten, freien Aminosäuren den großen Vorzug, daß sie auch in kleineren Mengen exakt dosiert werden können. In vorteilhafter Ausführungsform kennzeichnet sich die erfindungsgemäße Verwendung auch dadurch, daß eine Menge von 0,01 bis 5,0 Gew.-% lösliche L-Tryptophan- und/oder L-Threonin-Salze zur Supplementierung verwendet werden. Insbesondere in einem besonders bevorzugten Mengenbereich von 0,01 bis 0,1 Gew.-% ist mit der flüssigen Form der hochkonzentrierten Salzlösungen des L-Threonins und L-Tryptophans eine hervorragende und exakte Dosierbarkeit gewährleistet.

Die erfindungsgemäß verwendbaren L-Tryptophan- und/oder L-Threonin-Salzlösungen werden im einfachsten Falle durch Auflösen der entsprechenden Aminosäuren in Wasser und Zugabe der äquivalenten Menge an Natronlauge oder Kalilauge erhalten. Einfacher und zweckmäßiger ist es selbstverständlich, bei der industriellen Herstellung der L-Aminosäuren gleich auf wäßrige Lösungen der Salze hinzuarbeiten, die die L-Aminosäure in der gewünschten Konzentration enthalten. Dies vereinfacht naturgemäß die Herstellung und erspart, insbesondere im Vergleich zur Herstellung der kristallisierten, freien Aminosäuren, Kosten.

Die Erfindung soll durch die nachfolgenden Beispiele erläutert werden:

### Beispiel 1:

Bei 20 °C wurden 1 Äquivalent Aminosäure und 1 Äquivalent Natronlauge oder Kalilauge in Wasser gelöst. Folgende Konzentrationen waren erreichbar:
70 Gew.-% L-Tryptophan-Natriumsalz ≅ 63 Gew.-% L-Tryptophan;
75 Gew.-% L-Tryptophan-Kaliumsalz ≅ 63 Gew.-% L-Tryptophan;
81 Gew.-% L-Threonin-Natriumsalz ≅ 68 Gew.-% L-Threonin.

### Beispiel 2:

Ohne Kristallbildung, fließfähig, chemisch stabil und racemisierungsfrei blieben nach Lagerversuchen über drei Monate bei +5 °C wäßrige Lösungen mit:
55 Gew.-% L-Tryptophan-Natriumsalz ≅ 50 Gew.-% L-Tryptophan (Viskosität der Lösung: 440 centipoise (cp) bei +5 °C, 130 cp bei +20 °C);
65 Gew.-% L-Typtophan-Kaliumsalz ≅ 55 Gew.-% L-Tryptophan (Viskosität der Lösung: 840 cp bei +5 °C, 220 cp bei +20 °C);
65 Gew.-% L-Threonin-Natriumsalz ≅ 55 Gew.-% L-Threonin (Viskosität der Lösung: 1940 cp bei +5 °C, 400 cp bei +20 °C);
73 Gew.-% L-Threonin-Kaliumsalz ≅ 55 Gew.-% L-Threonin (Viskosität der Lösung: 1130 cp bei +5 °C, 210 cp bei +20 °C).

### Beispiel 3:

Ohne Kristallbildung, hochviskos, chemisch stabil und racemisierungsfrei blieben nach Lagerversuchen über drei Monate bei -20 °C wäßrige Lösungen mit:
65 Gew.-% L-Threonin-Natriumsalz ≅ 55 Gew.-% L-Threonin (Viskosität der Lösung: >2000 cp bei -20 °C, 400 cp bei +20 °C);
73 Gew.-% L-Threonin-Kaliumsalz ≅ 55 Gew.-% L-Threonin (Viskosität der Lösung: >2000 cp bei -20 °C, 210 cp bei +20 °C).

### Beispiel 4:

Ohne Kristallbildung, fließfähig, chemisch stabil und racemisierungsfrei blieben nach Lagerversuchen über drei Monate bei -20 °C wäßrige Lösungen mit:
53 Gew.-% L-Threonin-Natriumsalz ≅ 45 Gew.-% L-Threonin (Viskosität der Lösung: >2000 cp bei -20 °C, 55 cp bei +20 °C);
60 Gew.-% L-Threonin-Kaliumsalz ≅ 45 Gew.-% L-Threonin (Viskosität der Lösung: 320 cp bei -20 °C, 6 cp bei +20 °C).

### Beispiel 5:

Ohne Kristallbildung, fließfähig, chemisch stabil und racemisierungsfrei blieben nach Lagerversuchen über drei Monate bei -5 °C wäßrige Lösungen mit:
33 Gew.-% L-Tryptophan-Natriumsalz ≅ 30 Gew.-% L-Tryptophan (Viskosität der Lösung: 40 cp bei -5 °C, 10 cp bei +20 °C);
65 Gew.-% L-Tryptophan-Kaliumsalz ≅ 55 Gew.-% L-Tryptophan (Viskosität der Lösung: >2000 cp bei -5 °C, 220 cp bei +20 °C).

Weitere Ausführungsformen und Vorteile der Erfindung ergeben sich aus den nachfolgenden Patentansprüchen.

## Patentansprüche

1. Verwendung von lagerstabilen, hochkonzentrierten wässrigen L-Tryptophan- und/oder L-Threonin-Salzlösungen mit einem Gehalt an L-Tryptophan und/oder L-Threonin von jeweils zwischen 30 und 70 Gew.-% zur Supplementierung von Tierfuttermitteln und industriell hergestellten Mischfuttern mit L-Tryptophan und/oder L-Threonin.

2. Verwendung nach Anspruch 1,
**gekennzeichnet durch**
eine Lagerstabilität der eingesetzten Supplementierungslösung von wenigstens drei Monaten bei Temperaturen zwischen -20 °C und +5 °C.

3. Verwendung nach Anspruch 1 oder 2,
**gekennzeichnet durch**
Einsatz einer Menge von 0,01 bis 5,0 Gew.-% löslicher L-Tryptophan- und/oder L-Threonin-Salze zur Supplementierung.

4. Verwendung nach einem der vorhergehenden Ansprüche von L-Tryptophan-Natrium- und/oder Kaliumsalz.

5. Verwendung nach einem der Ansprüche 1 - 3 von L-Threonin-Natrium- und/oder Kaliumsalz.
